# EUROPÄISCHE PATENTSCHRIFT

(11) **EP 2 232 973 B1**
(45) Veröffentlichungstag und Bekanntmachung des Hinweises auf die Patenterteilung: **20.02.2013**
(21) Anmeldenummer: 10155642.1
(22) Anmeldetag: 05.03.2010
(51) Int. Cl.: A01B 59/041

(54) **Stabilisator für einen Unterlenker eines Dreipunktgeräteanbaus eines Traktors**
Stabiliser for a lower link of a three-point hitch of a tractor
Stabilisateur pour une barre inférieure d'un dispositif d'attelage à trois points d'un tracteur

(30) Priorität: 26.03.2009 DE 102009001907
(43) Veröffentlichungstag der Anmeldung: 29.09.2010
(60) Teilanmeldung: 12156907.3
(73) Patentinhaber: Deere & Company, Moline, IL 61265-8098 (US)
(72) Erfinder: Sterzel, Henrik, 67061, Ludwigshafen (DE); Onken, Hanko, 68167, Mannheim (DE)
(74) Vertreter: Dehnhardt, Florian Christopher

(56) Entgegenhaltungen:
- EP-A1- 1 342 399
- WO-A1-98/34460
- DE-U1- 8 810 247
- US-A- 5 462 303

## Beschreibung

Die Erfindung betrifft einen Stabilisator für einen Unterlenker eines Dreipunktgeräteanbaus eines Traktors, mit einem ersten Stabilisatorglied und einem gegenüber dem ersten Stabilisatorglied federnd gelagerten zweiten Stabilisatorglied, wobei ein mit dem ersten Stabilisatorglied verbundenes Sperrmittel vorgesehen ist, das zur Einschränkung einer Federbewegung des ersten Stabilisatorglieds gegenüber dem zweiten Stabilisatorglied in eine vorgegebene Sperrstellung verbringbar ist.

Ein derartiger Stabilisator für einen Unterlenker eines Dreipunktgeräteanbaus an einem Traktor ist aus der DE 602 00 422 T2 und US 5 462 303 bekannt. Der zwischen Traktor und Unterlenker gelenkig angebrachte Stabilisator umfasst ein erstes und ein zweites Stabilisatorglied, wobei die beiden Stabilisatorglieder derart miteinander verbunden sind, dass sich diese gegeneinander federnd bewegen können. Ein an dem ersten Stabilisatorglied schwenkbar angelenktes Sperrmittel dient der gegenseitigen Verriegelung der beiden Stabilisatorglieder, wozu sich eine in dem Sperrmittel vorgesehene Ausnehmung mit einem an dem zweiten Stabilisatorglied ausgebildeten Vorsprung in Eingriff bringen lässt. Da der Stabilisator im Bereich des Unterlenkers des Dreipunktgeräteanbaus gerade während der Feldarbeit vergleichsweise hohen Verschmutzungen ausgesetzt ist, besteht die Möglichkeit, dass sich diese im Bereich der Ausnehmung des Sperrmittels bzw. des am zweiten Stabilisator ausgebildeten Vorsprungs ablagern bzw. festsetzen und so eine einwandfreie Funktion des Sperrmittels beeinträchtigen.

Es ist daher Aufgabe der vorliegenden Erfindung, einen Stabilisator mit einem gegenüber Verschmutzungen unempfindlichen Sperrmittel anzugeben.

Diese Aufgabe wird gemäß den Merkmalen des Patentanspruchs 1 gelöst.

Der Stabilisator für einen Unterlenker eines Dreipunktgeräteanbaus eines Traktors umfasst ein erstes Stabilisatorglied und ein gegenüber dem ersten Stabilisatorglied federnd gelagertes zweites Stabilisatorglied, wobei ein mit dem ersten Stabilisatorglied verbundenes Sperrmittel vorgesehen ist, das zur Einschränkung einer Federbewegung des ersten Stabilisatorglieds gegenüber dem zweiten Stabilisatorglied in eine vorgegebene Sperrstellung verbringbar ist. Erfindungsgemäß bildet das mit dem ersten Stabilisatorglied verbundene Sperrmittel in der vorgegebenen Sperrstellung einen mit einem Begrenzungsmittel zusammenwirkenden einseitigen Anschlag in Bezug auf eine Einfederbewegung des zweiten Stabilisatorglieds gegenüber dem ersten Stabilisatorglied.

Aufgrund der Verwendung eines einseitigen Anschlags und der dadurch ermöglichten offenen Bauweise des Sperrmittels ist dieses vergleichsweise unempfindlich gegenüber Verschmutzungen. Da von dem Sperrmittel ausschließlich eine am Stabilisator auftretende Einfederbewegung blockiert wird, nicht jedoch eine in entgegengesetzter Richtung auftretende Ausfederbewegung, ist - beispielsweise zur Vermeidung eines unerwünschten Hin- und Herschwingens der während einer Straßenfahrt des Traktors angehobenen Unterlenker - jedem der beiden Unterlenker des Dreipunktgeräteanbaus ein separater Stabilisator zugeordnet.

Bei dem ersten Stabilisatorglied handelt es sich insbesondere um ein im Wesentlichen zylindrisches Stabilisatorgehäuse, innerhalb dessen das als Federkolben ausgebildete zweite Stabilisatorglied längsbeweglich geführt ist. Eine zwischen einer Innenseite des Stabilisatorgehäuses und dem Federkolben angeordnete Federung in Gestalt einer oder mehrerer Schraubenfedern drängt den Federkolben in eine vorgegebene Ruhestellung und bewirkt eine Selbstzentrierung der Unterlenker. Vorteilhafte Ausführungen des erfindungsgemäßen Stabilisators gehen aus den Unteransprüchen hervor.

Vorzugsweise ist das Sperrmittel als Sperrklappe ausgebildet, wobei die Sperrklappe mittels einer quer zur Längsrichtung des Stabilisators verlaufenden Drehachse schwenkbar mit dem ersten Stabilisatorglied verbunden ist. Die Sperrklappe ist über eine Zuglasche mittels eines Zugseils oder einer Zugkette derart mit dem Traktor verbindbar, dass diese beim Anheben der Unterlenker selbsttätig in die vorgegebene Sperrstellung geschwenkt wird.

Die Sperrklappe kann das erste Stabilisatorglied in der vorgegebenen Sperrstellung zumindest teilweise umschließen, sodass ein zusätzlicher Schutz vor Verschmutzungen gegeben ist. Die als Guss- oder Schmiedeteil gefertigte Sperrklappe weist insbesondere die Form einer das erste Stabilisatorglied zumindest teilweise umgreifenden bzw. umkragenden Halbschale auf, wobei die Halbschale in zwei gegenüberliegende Scharnierlaschen ausläuft, mittels derer eine schwenkbare Verbindung mit dem ersten Stabilisatorglied herstellbar ist.

Der einseitige Anschlag ist insbesondere durch eine an der Sperrklappe stirnseitig vorgesehene Abflachung gebildet. Die Abflachung kann in der vorgegebenen Sperrstellung der Sperrklappe derart mit dem Begrenzungsmittel zur Anlage gebracht werden, dass eine Einfederbewegung des zweiten Stabilisatorglieds gegenüber dem ersten Stabilisatorglied unterbunden wird.

Zur Erzielung eines definierten Schwenkbereichs ist es von Vorteil, wenn die Sperrklappe einen ein Ausmaß einer Schwenkbewegung begrenzenden Vorsprung aufweist. Der Vorsprung ist vorzugsweise derart an der Sperrklappe angeordnet, dass dieser beim Herausschwenken der Sperrklappe aus der vorgegebenen Sperrstellung in Richtung des ersten Stabilisatorglieds geführt und zur Begrenzung der Schwenkbewegung mit diesem zur Anlage gebracht wird. Der Vorsprung ist vorzugsweise einstückiger Bestandteil der Sperrklappe.

Zur Herstellung einer traktorseitigen Gelenkverbindung kann das erste Stabilisatorglied ein Kugelauge umfassen. Das Kugelauge besteht aus einer in einem Endbereich des ersten Stabilisatorglieds ausgeformten Befestigungsöse sowie einer darin drehbar gelagerten Befestigungskugel, die eine räumliche Bewegung des Stabilisators gegenüber dem Traktor erlaubt.

Weiterhin kann das zweite Stabilisatorglied einen Befestigungsschenkel zur Herstellung einer Gelenkverbindung mit einem Unterlenker eines Dreipunktgeräteanbaus umfassen. Der Befestigungsschenkel weist eine an dem Unterlenker anbringbare Befestigungsgabel auf, wobei die mittels der Befestigungsgabel mit dem Unterlenker herstellbare Gelenkverbindung gegenüber der traktorseitigen Gelenkverbindung derart senkrecht angelenkt ist, dass der Stabilisator sowohl horizontalen als auch vertikalen Auslenkungen des Unterlenkers folgen kann.

Das Begrenzungsmittel ist insbesondere als am zweiten Stabilisatorglied vorgesehener Begrenzungskragen ausgebildet. Der Begrenzungskragen kann einstückiger Bestandteil des zweiten Stabilisatorglieds sein und dieses umfangsmäßig in Gestalt eines in Richtung der Sperrklappe abgeflachten Stößels umragen.

Vorzugsweise ist das zweite Stabilisatorglied gegenüber dem ersten Stabilisatorglied drehbar gelagert, wobei ein innerhalb des zweiten Stabilisatorglieds ausgebildetes Innengewinde an einem an dem Befestigungsschenkel ausgebildeten Außengewinde derart eingreift, dass der Stabilisator durch Drehung des zweiten Stabilisatorglieds gegenüber dem ersten Stabilisatorglied bezüglich seiner Gesamtlänge verstellbar ist. Auf diese Weise lässt sich die Stellung der Unterlenker an die Abmessungen unterschiedlicher Anbaugeräteschnittstellen anpassen.

Zur manuellen Drehbetätigung des zweiten Stabilisatorglieds kann das Begrenzungsmittel ein Griffstück aufweisen bzw. als solches ausgebildet sein. Das Griffstück ist drehfest mit dem zweiten Stabilisatorglied verbunden. Zur Erhöhung der Griffigkeit kann das Griffstück mit einer geeigneten Oberflächenstruktur versehen sein. Der Durchmesser des Griffstücks ist vorzugsweise derart bemessen, dass eine Einhandbetätigung möglich ist.

Das Griffstück ist insbesondere durch einen sich in Richtung des Befestigungsschenkels verjüngenden Fortsatz des Begrenzungskragens gebildet. Der Fortsatz kann eine einfach zu fertigende konische Form aufweisen.

Der Begrenzungskragen und das Griffstück können einstückiger Bestandteil des zweiten Stabilisatorglieds sein. Bei dem zweiten Stabilisatorglied kann es sich in diesem Fall - ebenso wie auch bei dem ersten Stabilisatorglied - um ein aus einer geeigneten Stahllegierung gefertigtes Guss- oder Schmiedeteil handeln.

Des Weiteren ist es möglich, dass die Sperrklappe in Richtung des Begrenzungskragens verjüngt ist. Die Verjüngung ist derart ausgeformt, dass in der vorgegebenen Sperrstellung der Sperrklappe im Bereich des Begrenzungskragens ein weitgehend glatter Verlauf der Stabilisatoraußenkontur geschaffen wird. Eine unerwünschte Ablagerung von Verschmutzungen, die gegebenenfalls zu einer Beeinträchtigung der Funktion des Stabilisators führen können, lässt sich auf diese Weise verringern.
Um einer unbeabsichtigten Verstellung der Gesamtlänge des Stabilisators vorzubeugen, kann eine Drehung des zweiten Stabilisatorglieds gegenüber dem ersten Stabilisatorglied mittels eines Verriegelungsmittels arretierbar sein.

Das Verriegelungsmittel kann einen Federbügel umfassen, der in eine am Umfang des Begrenzungsmittels vorgesehene Ausnehmung eingreift bzw. gepresst wird. Der Federbügel lässt sich entgegen einer rückstellenden Federkraft von Hand aus der Ausnehmung herausschwenken, sodass eine Drehung des Begrenzungsmittels freigegeben wird.

Zur Erleichterung einer manuellen Betätigung des Federbügels umfasst dieser an seinem freien Ende einen ösenförmig aufgeweiteten Griffbereich. Die rückstellende Federkraft ist derart bemessen, dass einerseits eine zuverlässige Arretierung des drehbaren Begrenzungsmittels gewährleistet wird, andererseits eine werkzeuglose Betätigung des Federbügels möglich ist. Der Federbügel ist beispielsweise aus einem rostfreien oder in entsprechender Weise oberflächenbehandelten Runddraht gefertigt.

Die Ausnehmung weist insbesondere die Gestalt einer schlitzförmigen Vertiefung auf, die in Richtung einer zwischen dem ersten Stabilisatorglied und dem zweiten Stabilisatorglied auftretenden Federbewegung orientiert ist. Die schlitzförmige Vertiefung ist derart ausgebildet, dass diese ein an dem Federbügel vorgesehenes Arretiersegment vollständig aufnimmt. Da der Federbügel entlang der schlitzförmigen Vertiefung zu gleiten vermag, wird eine zwischen den beiden Stabilisatorgliedern auftretende Federbewegung nicht behindert.

Vorzugsweise ist eine Vielzahl von Ausnehmungen entlang des Umfangs des Begrenzungsmittels gleichmäßig verteilt angeordnet, sodass sich die Gesamtlänge des Stabilisators stufenweise verstellen und arretieren lässt. Die Anzahl und damit der Abstand der Ausnehmungen kann derart bemessen sein, dass diese eine gerillte Reibfläche bilden, die eine quasi stufenlose Verstellung und Arretierung des Begrenzungsmittels ermöglicht.

Ferner ist es von Vorteil, wenn die Sperrklappe im Bereich des Federbügels derart ausgespart ist, dass ein Herausschwenken des Federbügels auch bei in der vorgegebenen Sperrstellung befindlicher Sperrklappe möglich ist. Die Aussparung weist beispielsweise die Gestalt eines in Längsrichtung des Stabilisators orientierten Schlitzes auf. Alternativ besteht die Möglichkeit, dass der Federbügel an einer der Sperrklappe abgewandten Seite des Stabilisators vorgesehen ist. Eine Aussparung im Bereich der Sperrklappe erübrigt sich in diesem Fall.

Der erfindungsgemäße Stabilisator wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine erste perspektivische Ansicht eines Ausführungsbeispiels des erfindungsgemäßen Stabilisators für einen Unterlenker eines Dreipunktgeräteanbaus,
- Fig. 2: eine zweite perspektivische Ansicht des in Fig. 1 wiedergegebenen Ausführungsbeispiels des erfindungsgemäßen Stabilisators,
- Fig. 3: eine dritte perspektivische Ansicht des in Fig. 1 wiedergegebenen Ausführungsbeispiels des erfindungsgemäßen Stabilisators,
- Fig. 4: eine Explosionsdarstellung des in Fig. 1 wiedergegebenen Ausführungsbeispiels des erfindungsgemäßen Stabilisators, und
- Fig. 5: eine Ansicht eines Dreipunktgeräteanbaus an einem Traktorheck mit im Bereich zugehöriger Unterlenker montierten erfindungsgemäßen Stabilisatoren.

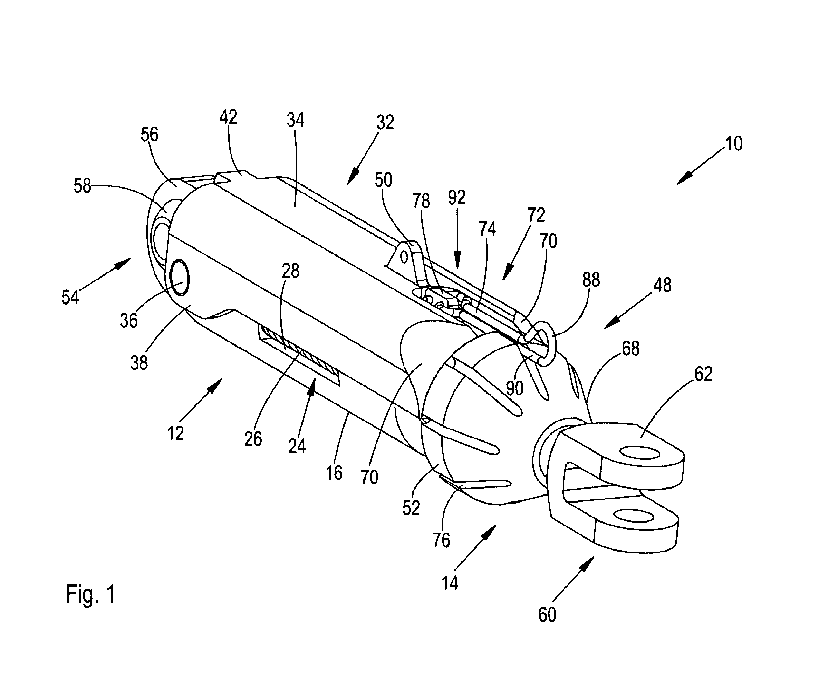

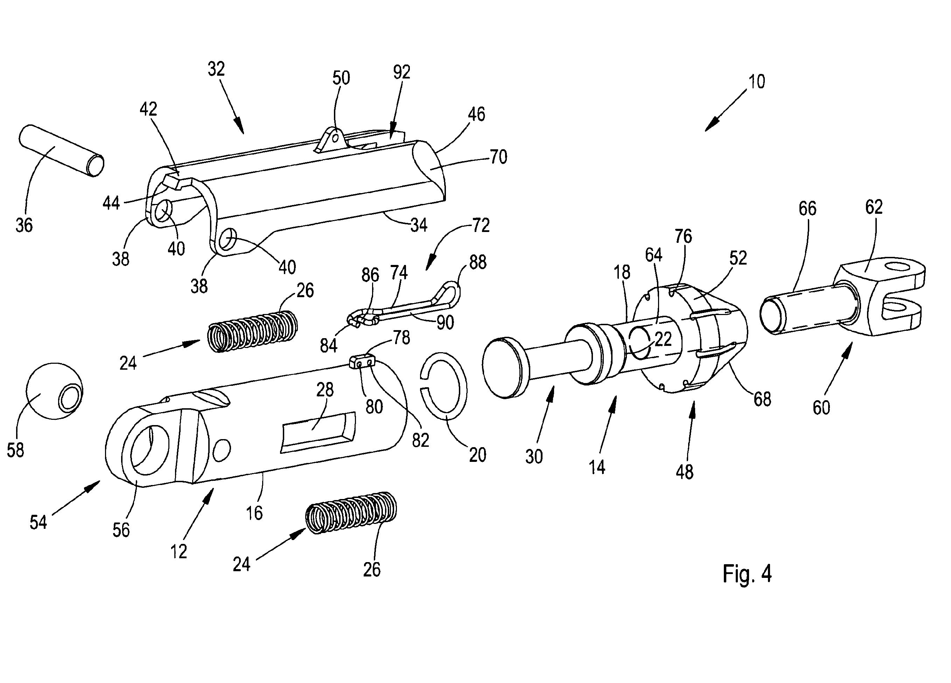

Fig. 1 bis Fig. 3 zeigen verschiedene perspektivische Ansichten eines Ausführungsbeispiels des erfindungsgemäßen Stabilisators für einen Unterlenker eines Dreipunktgeräteanbaus eines Traktors. Bezüglich konstruktiver Einzelheiten sei insbesondere auf die Explosionsdarstellung gemäß Fig. 4 verwiesen.

Der Stabilisator 10 umfasst ein erstes Stabilisatorglied 12 und ein gegenüber dem ersten Stabilisatorglied 12 federnd gelagertes zweites Stabilisatorglied 14. Bei dem ersten Stabilisatorglied 12 handelt es sich um ein im Wesentlichen zylindrisches Stabilisatorgehäuse 16, innerhalb dessen das als Federkolben 18 ausgebildete zweite Stabilisatorglied 14 längsbeweglich geführt und mittels eines Federrings 20, der in eine am Federkolben 18 umfangsmäßig ausgebildete Nut 22 eingreift, gesichert ist.

Es sei angemerkt, dass die Darstellung des ersten Stabilisatorglieds 12 als im Wesentlichen zylindrisches Stabilisatorgehäuse 16 lediglich beispielhaften Charakter hat. Vielmehr ist auch eine Vielzahl anderer Gehäuseformen denkbar.

Eine zwischen einer Innenseite des Stabilisatorgehäuses 16 und dem Federkolben 18 angeordnete Federung 24 drängt den Federkolben 18 in eine vorgegebene Ruhestellung und bewirkt eine Selbstzentrierung eines mit dem Stabilisator 10 verbindbaren Unterlenkers. Beispielsgemäß besteht die Federung 24 aus zwei Schraubenfedern 26, die auf gegenüberliegenden Innenseiten des Stabilisatorgehäuses 16 in zugehörigen Gehäuseaussparungen 28 gelagert sind und von einer am ersten Stabilisatorglied 12 umfangsmäßig vorgesehenen Ausnehmung 30 form- und kraftschlüssig in Eingriff genommen werden. Die Gehäuseaussparungen 28 können hierbei abweichend von der Darstellung in Fig. 1 bis Fig. 4 nach außen hin geschlossen sein.

Ferner ist ein mit dem ersten Stabilisatorglied 12 verbundenes Sperrmittel 32 vorgesehen. Das Sperrmittel 32 ist als Sperrklappe 34 ausgebildet, wobei die Sperrklappe 34 mittels einer quer zur Längsrichtung des Stabilisators 10 verlaufenden Drehachse 36 schwenkbar mit dem ersten Stabilisatorglied 12 verbunden ist.

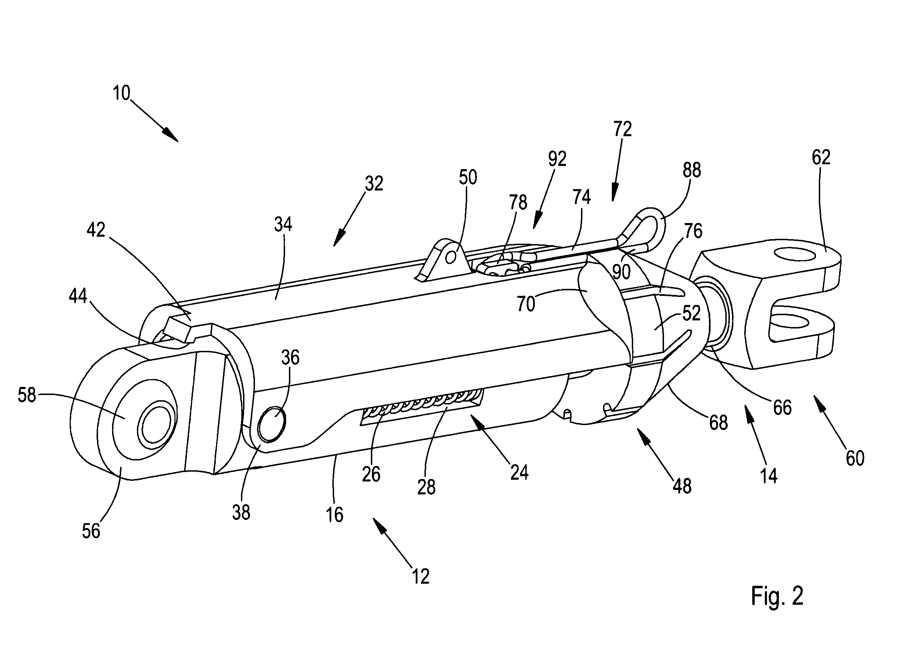

Die als Guss- oder Schmiedeteil gefertigte Sperrklappe 34 weist die Form einer das erste Stabilisatorglied 12 in einer in Fig. 1 bzw. Fig. 2 gezeigten vorgegebenen Sperrstellung zumindest teilweise umgreifenden bzw. umkragenden Halbschale auf, wobei die Halbschale in zwei gegenüberliegende Scharnierlaschen 38 ausläuft, in denen miteinander fluchtende Bohrungen 40 zur Aufnahme der Drehachse 36 und damit zur Herstellung der schwenkbaren Verbindung mit dem ersten Stabilisatorglied 12 ausgebildet sind.

Zur Erzielung eines definierten Schwenkbereichs weist die Sperrklappe 34 einen das Ausmaß einer Schwenkbewegung begrenzenden Vorsprung 42 auf. Der Vorsprung 42 ist derart an der Sperrklappe 34 angeordnet, dass dieser beim Herausschwenken der Sperrklappe 34 aus der vorgegebenen Sperrstellung in Richtung des ersten Stabilisatorglieds 12 geführt und zur Begrenzung der Schwenkbewegung mit diesem zur Anlage gebracht wird. Im vorliegenden Fall ist der Vorsprung 42 einstückiger Bestandteil der Sperrklappe 34 und umfasst eine in Schwenkrichtung der Sperrklappe 34 ausgerichtete Nase 44.

Die Sperrklappe 34 weist ferner einen durch eine stirnseitig vorgesehene Abflachung 46 gebildeten einseitigen Anschlag auf. Die Abflachung 46 lässt sich in der vorgegebenen Sperrstellung der Sperrklappe 34 derart mit einem Begrenzungsmittel 48 zur Anlage bringen, dass eine Einfederbewegung des zweiten Stabilisatorglieds 14 gegenüber dem ersten Stabilisatorglied 12 unterbunden wird.

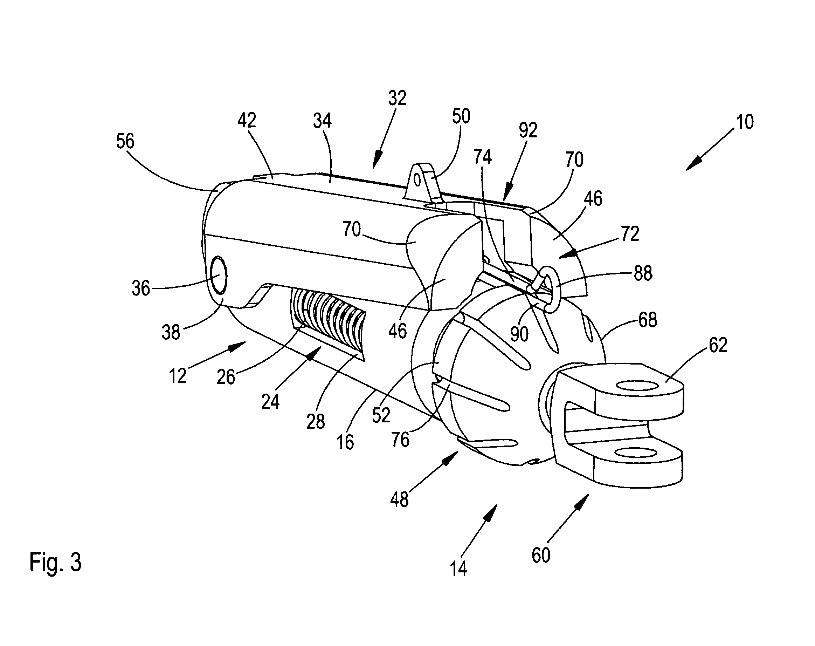

Eine an der Sperrklappe 34 angeordnete Zuglasche 50 ermöglicht ein in Fig. 3 angedeutetes Herausschwenken der Sperrklappe 34 aus der vorgegebenen Sperrstellung und damit eine Freigabe einer zwischen den beiden Stabilisatorgliedern 12 und 14 auftretenden Einfederbewegung.

Das Begrenzungsmittel 48 ist beispielsgemäß als am zweiten Stabilisatorglied 14 vorgesehener Begrenzungskragen 52 ausgebildet. Der Begrenzungskragen 52 ist einstückiger Bestandteil des zweiten Stabilisatorglieds 14 und umragt das zweite Stabilisatorglied 14 umfangsmäßig in Gestalt eines in Richtung der Sperrklappe 34 abgeflachten Stößels.

Somit stellt das durch die Sperrklappe 34 gebildete Sperrmittel 32 in der vorgegebenen Sperrstellung einen mit dem Begrenzungsmittel 48 zusammenwirkenden einseitigen Anschlag in Bezug auf eine Einfederbewegung des zweiten Stabilisatorglieds 14 gegenüber dem ersten Stabilisatorglied 12 dar.

Zur Herstellung einer traktorseitigen Gelenkverbindung umfasst das erste Stabilisatorglied 12 ein Kugelauge 54. Das Kugelauge 54 besteht aus einer in einem Endbereich des ersten Stabilisatorglieds 12 ausgeformten Befestigungsöse 56 sowie einer darin drehbar gelagerten Befestigungskugel 58, die eine räumliche Bewegung des Stabilisators 10 gegenüber dem Traktor erlaubt.

Weiterhin umfasst das zweite Stabilisatorglied 14 einen Befestigungsschenkel 60 zur Herstellung einer Gelenkverbindung mit einem Unterlenker eines Dreipunktgeräteanbaus, wobei der Befestigungsschenkel 60 eine an dem Unterlenker anbringbare Befestigungsgabel 62 aufweist.

Beispielsgemäß ist das zweite Stabilisatorglied 14 gegenüber dem ersten Stabilisatorglied 12 drehbar gelagert, wobei ein innerhalb des zweiten Stabilisatorglieds 14 ausgebildetes Innengewinde 64 an einem an dem Befestigungsschenkel 60 ausgebildeten Außengewinde 66 derart eingreift, dass der Stabilisator 10 durch Drehung des zweiten Stabilisatorglieds 14 gegenüber dem ersten Stabilisatorglied 12 bezüglich seiner Gesamtlänge verstellbar ist.

Zur manuellen Drehbetätigung des zweiten Stabilisatorglieds 14 weist das Begrenzungsmittel 48 ein Griffstück 68 auf. Das Griffstück 68 ist drehfest mit dem zweiten Stabilisatorglied 14 verbunden. Der Durchmesser des Griffstücks 68 ist derart bemessen, dass eine Einhandbetätigung möglich ist.

Im vorliegenden Fall ist das Griffstück 68 durch einen sich in Richtung des Befestigungsschenkels 60 verjüngenden Fortsatz des Begrenzungskragens 52 gebildet. Der Fortsatz weist eine konische Form auf.

Der Begrenzungskragen 52 und das Griffstück 68 sind einstückiger Bestandteil des zweiten Stabilisatorglieds 14. Bei dem zweiten Stabilisatorglied 14 handelt es sich - ebenso wie auch bei dem ersten Stabilisatorglied 12 - um ein aus einer geeigneten Stahllegierung gefertigtes Guss- oder Schmiedeteil.

Des Weiteren ist die Sperrklappe 34 in Richtung des Begrenzungskragens 52 verjüngt. Die Verjüngung 70 ist derart ausgeformt, dass im Bereich des Begrenzungskragens 52 ein weitgehend glatter Verlauf der Stabilisatoraußenkontur geschaffen wird. Eine unerwünschte Ablagerung von Verschmutzungen, die gegebenenfalls zu einer Beeinträchtigung der Funktion des Stabilisators 10 führen können, lässt sich auf diese Weise verringern.

Um einer unbeabsichtigten Verstellung der Gesamtlänge des Stabilisators 10 vorzubeugen, ist eine Drehung des zweiten Stabilisatorglieds 14 gegenüber dem ersten Stabilisatorglied 12 mittels eines Verriegelungsmittels 72 arretierbar.

Das Verriegelungsmittel 72 umfasst einen Federbügel 74, der in eine am Umfang des Begrenzungsmittels 48 vorgesehene Ausnehmung 76 eingreift bzw. gepresst wird. Der Federbügel 74 lässt sich entgegen einer rückstellenden Federkraft von Hand aus der Ausnehmung 76 herausschwenken, sodass eine Drehung des Begrenzungsmittels 48 freigegeben wird. Eine am ersten Stabilisatorglied 12 angeordnete Befestigungslasche 78 dient der Halterung des Federbügels 74. Die Befestigungslasche 78 weist zwei in Längsrichtung des Stabilisators 10 beabstandete Querbohrungen 80 bzw. 82 auf, wobei jede der beiden Querbohrungen 80 bzw. 82 ein offenes Ende 84 bzw. 86 des Federbügels 74 aufnimmt.

Zur Erleichterung einer manuellen Betätigung des Federbügels 74 umfasst dieser ferner an seinem freien Ende einen ösenförmig aufgeweiteten Griffbereich 88. Die rückstellende Federkraft ist derart bemessen, dass einerseits eine zuverlässige Arretierung des drehbaren Begrenzungsmittels 48 gewährleistet wird, andererseits eine werkzeuglose Betätigung des Federbügels 74 möglich ist. Der Federbügel 74 ist aus einem rostfreien oder in entsprechender Weise oberflächenbehandelten Runddraht gefertigt.

Die Ausnehmung 76 weist die Gestalt einer schlitzförmigen Vertiefung auf, die in Richtung einer zwischen dem ersten Stabilisatorglied 12 und dem zweiten Stabilisatorglied 14 auftretenden Federbewegung orientiert ist. Die schlitzförmige Vertiefung ist derart ausgebildet, dass diese ein an dem Federbügel 74 vorgesehenes Arretiersegment 90 vollständig aufnimmt. Da der Federbügel 74 entlang der schlitzförmigen Vertiefung zu gleiten vermag, wird eine zwischen den beiden Stabilisatorgliedern 12 und 14 auftretende Federbewegung nicht behindert.

Beispielsgemäß ist eine Vielzahl von Ausnehmungen 76 entlang des Umfangs des Begrenzungsmittels 48 gleichmäßig verteilt angeordnet, sodass sich die Gesamtlänge des Stabilisators 10 stufenweise verstellen und arretieren lässt. Die Ausnehmungen 76 sind in Richtung des Griffstücks 68 verlängert, sodass diese eine die Griffigkeit erhöhende Oberflächenstruktur bilden.

Die Sperrklappe 34 ist im Bereich des Federbügels 74 derart ausgespart, dass ein Herausschwenken des Federbügels 74 auch bei in der vorgegebenen Sperrstellung befindlicher Sperrklappe 34 möglich ist. Die Aussparung 92 weist hierzu die Gestalt eines in Längsrichtung des Stabilisators 10 orientierten Schlitzes auf.

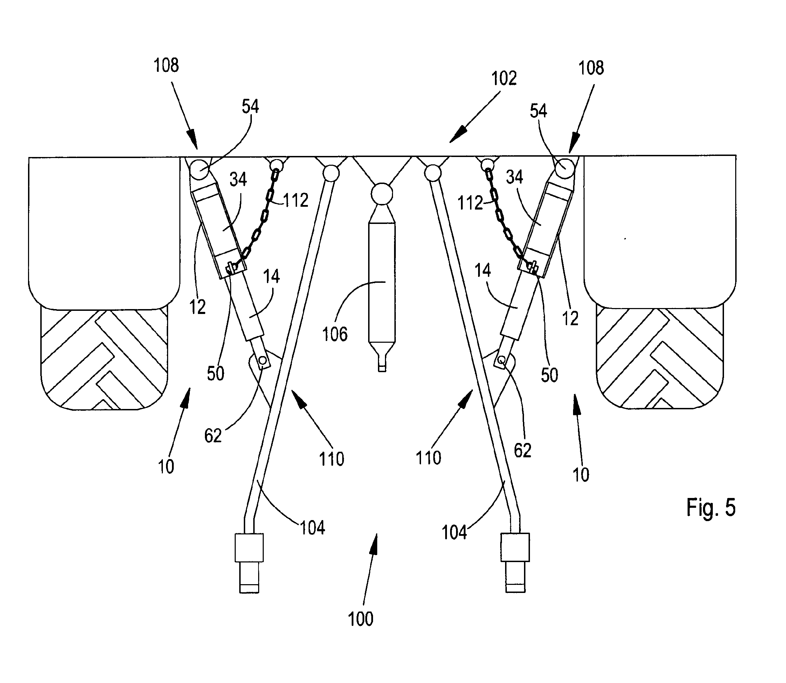

Fig. 5 zeigt eine Ansicht eines Dreipunktgeräteanbaus 100 an einem Traktorheck 102 mit im Bereich zugehöriger Unterlenker 104 montierten erfindungsgemäßen Stabilisatoren 10. Der dargestellte Oberlenker 106 ist von herkömmlicher Bauart, sodass auf diesen nicht näher eingegangen werden soll.

Beispielsgemäß ist das erste Stabilisatorglied 12 eines jeden Stabilisators 10 mittels seines Kugelauges 54 mit einer an einem Karosserieteil des Traktors ausgebildeten ersten Anbindungsstelle 108 und das zweite Stabilisatorglied 14 mittels seiner Befestigungsgabel 62 mit einer am Unterlenker 104 ausgebildeten zweiten Anbindungsstelle 110 gelenkig verbunden. Die mittels der Befestigungsgabel 62 mit dem Unterlenker 104 hergestellte Gelenkverbindung ist gegenüber der traktorseitigen Gelenkverbindung derart senkrecht angelenkt, dass der Stabilisator 10 sowohl horizontalen als auch vertikalen Auslenkungen des Unterlenkers 104 folgen kann.

Die beiden Stabilisatoren 10 sind bezüglich ihres Aufbaus identisch, wobei jeder der beiden Stabilisatoren 10 über seine jeweilige Zuglasche 50 mittels einer federnd aufgehängten Zugkette 112 derart mit dem Traktor verbunden ist, dass die Sperrklappe 34 beim Anheben des Unterlenkers 104 in die vorgegebene Sperrstellung geschwenkt und eine zwischen den beiden Stabilisatorgliedern 12 und 14 auftretende Einfederbewegung unterbunden wird. Dies ist vor allem bei der Durchführung einer Straßenfahrt mit am Dreipunktgeräteanbau 100 angebrachtem Arbeitsgerät von Vorteil, da in diesem Fall ein unerwünschtes Hin- und Herschwingen des Arbeitsgeräts vermieden werden kann.

## Patentansprüche

1. Stabilisator für einen Unterlenker eines Dreipunktgeräteanbaus eines Traktors, mit einem ersten Stabilisatorglied (12) und einem gegenüber dem ersten Stabilisatorglied (12) federnd gelagerten zweiten Stabilisatorglied (14), wobei ein mit dem ersten Stabilisatorglied (12) verbundenes Sperrmittel (32) vorgesehen ist, das zur Einschränkung einer Federbewegung des ersten Stabilisatorglieds (12) gegenüber dem zweiten Stabilisatorglied (14) in eine vorgegebene Sperrstellung verbringbar ist, wobei das mit dem ersten Stabilisatorglied (12) verbundene und als Sperrklappe (34) ausgebildete Sperrmittel (32) in der vorgegebenen Sperrstellung einen mit einem Begrenzungsmittel (48) zusammenwirkenden einseitigen Anschlag in Bezug auf eine Einfederbewegung des zweiten Stabilisatorglieds (14) gegenüber dem ersten Stabilisatorglied (12) bildet, **dadurch gekennzeichnet, dass** der Anschlag durch eine an der Sperrklappe (34) stirnseitig vorgesehene Abflachung (46) gebildet ist.

2. Stabilisator nach Anspruch 1, **dadurch gekennzeichnet, dass** die Sperrklappe (34) mittels einer quer zur Längsrichtung des Stabilisators (10) verlaufenden Drehachse (36) schwenkbar mit dem ersten Stabilisatorglied (12) verbunden ist.

3. Stabilisator nach Anspruch 1 oder 2, **dadurch gekennzeichnet, dass** die Sperrklappe (34) das erste Stabilisatorglied (12) in der vorgegebenen Sperrstellung zumindest teilweise umschließt.

4. Stabilisator nach einem der Ansprüche 1 bis 3, **dadurch gekennzeichnet, dass** die Sperrklappe (34) einen das Ausmaß einer Schwenkbewegung begrenzenden Vorsprung (42) aufweist.

5. Stabilisator nach einem der Ansprüche 1 bis 4, **dadurch gekennzeichnet, dass** das erste Stabilisatorglied (12) ein Kugelauge (54) zur Herstellung einer traktorseitigen Gelenkverbindung umfasst.

6. Stabilisator nach einem der Ansprüche 1 bis 5, **dadurch gekennzeichnet, dass** das zweite Stabilisatorglied (14) einen Befestigungsschenkel (60) zur Herstellung einer Gelenkverbindung mit einem Unterlenker (104) eines Dreipunktgeräteanbaus (100) umfasst.

7. Stabilisator nach Anspruch 6, **dadurch gekennzeichnet, dass** das zweite Stabilisatorglied (14) gegenüber dem ersten Stabilisatorglied (12) drehbar gelagert ist, wobei ein innerhalb des zweiten Stabilisatorglieds (14) ausgebildetes Innengewinde (64) an einem an dem Befestigungsschenkel (60) ausgebildeten Außengewinde (66) derart eingreift, dass der Stabilisator (10) durch Drehung des zweiten Stabilisatorglieds (14) gegenüber dem ersten Stabilisatorglied (12) bezüglich seiner Gesamtlänge verstellbar ist.

8. Stabilisator nach Anspruch 7, **dadurch gekennzeichnet, dass** das Begrenzungsmittel (48) als am zweiten Stabilisatorglied (14) vorgesehener Begrenzungskragen (52) ausgebildet ist.

9. Stabilisator nach Anspruch 8, **dadurch gekennzeichnet, dass** das Begrenzungsmittel (48) zur manuellen Drehung des zweiten Stabilisatorglieds (14) ein Griffstück (68) aufweist.

10. Stabilisator nach Anspruch 9, **dadurch gekennzeichnet, dass** das Griffstück (68) durch einen sich in Richtung des Befestigungsschenkels (60) verjüngenden Fortsatz des Begrenzungskragens (52) gebildet ist.

11. Stabilisator nach Anspruch 9 oder 10, **dadurch gekennzeichnet, dass** der Begrenzungskragen (52) und das Griffstück (68) einstückiger Bestandteil des zweiten Stabilisatorglieds (14) sind.

12. Stabilisator nach Anspruch 8 bis 11, **dadurch gekennzeichnet, dass** die Sperrklappe (34) in Richtung des Begrenzungskragens (52) verjüngt ist.

13. Stabilisator nach einem der Ansprüche 1 bis 12, **dadurch gekennzeichnet, dass** eine unbeabsichtigte Verstellung der Gesamtlänge des Stabilisators (10) mittels eines Verriegelungsmittels (72) arretierbar ist.

14. Stabilisator nach Anspruch 13, **dadurch gekennzeichnet, dass** das Verriegelungsmittel (72) einen Federbügel (74) umfasst, der in eine am Umfang des Begrenzungsmittels (48) vorgesehene Ausnehmung (76) eingreift.

15. Stabilisator nach Anspruch 14, **dadurch gekennzeichnet, dass** die Ausnehmung (76) die Gestalt einer schlitzförmigen Vertiefung aufweist, die in Richtung einer zwischen dem ersten Stabilisatorglied (12) und dem zweiten Stabilisatorglied (14) auftretenden Federbewegung orientiert ist.

16. Stabilisator nach Anspruch 14 oder 15, **dadurch gekennzeichnet, dass** eine Vielzahl von Ausnehmungen (76) entlang des Umfangs des Begrenzungsmittels (48) gleichmäßig verteilt angeordnet ist.

17. Stabilisator nach Anspruch 14 bis 16, **dadurch gekennzeichnet, dass** die Sperrklappe (34) im Bereich des Federbügels (74) derart ausgespart ist, dass ein Herausschwenken des Federbügels (74) bei in der vorgegebenen Sperrstellung befindlicher Sperrklappe (34) möglich ist.

## Claims

1. Stabilizer for a lower link of a three-point hitch of a tractor, with a first stabilizer element (12) and a second stabilizer element (14) mounted resiliently in relation to the first stabilizer element (12), wherein a blocking means (32) is provided, the blocking means being connected to the first stabilizer element (12) and being bringable into a predetermined blocking position in order to restrict a spring movement of the first stabilizer element (12) in relation to the second stabilizer element (14), wherein, in the predetermined blocking position, the blocking means (32) which is connected to the first stabilizer element (12) and is designed as a blocking flap (34) forms a stop on one side and interacting with a limiting means (48) with respect to a spring deflection movement of the second stabilizer element (14) in relation to the first stabilizer element (12), **characterized in that** the stop is formed by a flattened portion (46) provided on the end side of the blocking flap (34).

2. Stabilizer according to Claim 1, **characterized in that** the blocking flap (34) is connected pivotably to the first stabilizer element (12) by means of a rotary pin (36) running transversely with respect to the longitudinal direction of the stabilizer (10).

3. Stabilizer according to Claim 1 or 2, **characterized in that** the blocking flap (34) at least partially encloses the first stabilizer element (12) in the predetermined blocking position.

4. Stabilizer according to one of Claims 1 to 3, **characterized in that** the blocking flap (34) has a projection (42) limiting the extent of a pivoting movement.

5. Stabilizer according to one of Claims 1 to 4, **characterized in that** the first stabilizer element (12) comprises a spherical eye (54) for producing an articulated connection on the tractor side.

6. Stabilizer according to one of Claims 1 to 5, **characterized in that** the second stabilizer element (14) comprises a fastening limb (60) for producing an articulated connection to a lower link (104) of a three-point hitch (100).

7. Stabilizer according to Claim 6, **characterized in that** the second stabilizer element (14) is mounted rotatably in relation to the first stabilizer element (12), wherein an internal thread (64) formed within the second stabilizer element (14) acts on an external thread (66), which is formed on the fastening limb (60), in such a manner that the stabilizer (10) is adjustable in respect of the overall length thereof by rotation of the second stabilizer element (14) in relation to the first stabilizer element (12).

8. Stabilizer according to Claim 7, **characterized in that** the limiting means (48) is designed as a limiting collar (52) provided on the second stabilizer element (14).

9. Stabilizer according to Claim 8, **characterized in that** the limiting means (48) has a handle component (68) for the manual rotation of the second stabilizer element (14).

10. Stabilizer according to Claim 9, **characterized in that** the handle component (68) is formed by an extension of the limiting collar (52), the extension tapering in the direction of the fastening limb (60).

11. Stabilizer according to Claim 9 or 10, **characterized in that** the limiting collar (52) and the handle component (68) are an integral part of the second stabilizer element (14).

12. Stabilizer according to Claims 8 to 11, **characterized in that** the blocking flap (34) is tapered in the direction of the limiting collar (52).

13. Stabilizer according to one of Claims 1 to 12, **characterized in that** an unintentional adjustment of the overall length of the stabilizer (10) can be stopped by means of a locking means (72).

14. Stabilizer according to Claim 13, **characterized in that** the locking means (72) comprises a spring clip (74) which engages in a recess (76) provided on the circumference of the limiting means (48).

15. Stabilizer according to Claim 14, **characterized in that** the recess (76) is in the form of a slot-shaped depression which is oriented in the direction of a spring movement occurring between the first stabilizer element (12) and the second stabilizer element (14).

16. Stabilizer according to Claim 14 or 15, **characterized in that** a multiplicity of recesses (76) are distributed uniformly along the circumference of the limiting means (48).

17. Stabilizer according to Claims 14 to 16, **characterized in that** the blocking flap (34) is recessed in the region of the spring clip (74) in such a manner that the spring clip (74) can be pivoted out when the blocking flap (34) is in the predetermined blocking position.

## Revendications

1. Stabilisateur pour une barre inférieure d'un dispositif d'attelage à trois points d'un tracteur, comprenant un premier organe stabilisateur (12) et un deuxième organe stabilisateur (14) monté sur ressort par rapport au premier organe stabilisateur (12), un moyen de blocage (32) connecté au premier organe stabilisateur (12) étant prévu, lequel, pour limiter une course de ressort du premier organe stabilisateur (12) par rapport au deuxième organe stabilisateur (14), peut être amené dans une position de blocage prédéfinie, le moyen de blocage (32) connecté au premier organe stabilisateur (12) et réalisé sous forme de clapet de blocage (34) formant, dans la position de blocage prédéfinie, une butée d'un côté coopérant avec un moyen de limitation (48) par rapport à un mouvement de compression du ressort du deuxième organe stabilisateur (14) par rapport au premier organe stabilisateur (12), **caractérisé en ce que** la butée est formée par un méplat (46) prévu du côté frontal sur le clapet de blocage (34).

2. Stabilisateur selon la revendication 1, **caractérisé en ce que** le clapet de blocage (34) est connecté au moyen d'un axe pivotant (36) s'étendant transversalement à la direction longitudinale du stabilisateur (10) de manière pivotante au premier organe stabilisateur (12).

3. Stabilisateur selon la revendication 1 ou 2, **caractérisé en ce que** le clapet de blocage (34) entoure au moins en partie le premier organe stabilisateur (12) dans la position de blocage prédéfinie.

4. Stabilisateur selon l'une quelconque des revendications 1 à 3, **caractérisé en ce que** le clapet de blocage (34) présente une saillie (42) limitant l'ampleur d'un mouvement de pivotement.

5. Stabilisateur selon l'une quelconque des revendications 1 à 4, **caractérisé en ce que** le premier organe stabilisateur (12) comprend un oeillet sphérique (54) pour créer une liaison articulée du côté du tracteur.

6. Stabilisateur selon l'une quelconque des revendications 1 à 5, **caractérisé en ce que** le deuxième organe stabilisateur (14) comprend une branche de fixation (60) pour créer une liaison articulée avec une barre inférieure (104) d'un dispositif d'attelage à trois points (100).

7. Stabilisateur selon la revendication 6, **caractérisé en ce que** le deuxième organe stabilisateur (14) est monté à rotation par rapport au premier organe stabilisateur (12), un filetage interne (64) réalisé à l'intérieur du deuxième organe stabilisateur (14) s'engageant sur un filetage externe (66) réalisé sur la branche de fixation (60) de telle sorte que le stabilisateur (10) puisse être réglé en termes de sa longueur totale par rotation du deuxième organe stabilisateur (14) par rapport au premier organe stabilisateur (12).

8. Stabilisateur selon la revendication 7, **caractérisé en ce que** le moyen de limitation (48) est réalisé sous forme de collet de limitation (52) prévu sur le deuxième organe stabilisateur (14).

9. Stabilisateur selon la revendication 8, **caractérisé en ce que** le moyen de limitation (48) présente une pièce de préhension (68) pour la rotation manuelle du deuxième organe stabilisateur (14).

10. Stabilisateur selon la revendication 9, **caractérisé en ce que** la pièce de préhension (68) est formée par une saillie du collet de limitation (52) se rétrécissant dans la direction de la branche de fixation (60).

11. Stabilisateur selon la revendication 9 ou 10, **caractérisé en ce que** le collet de limitation (52) et la pièce de préhension (68) font partie intégrante du deuxième organe stabilisateur (14).

12. Stabilisateur selon les revendications 8 à 11, **caractérisé en ce que** le clapet de blocage (34) est rétréci dans la direction du collet de limitation (52).

13. Stabilisateur selon l'une quelconque des revendications 1 à 12, **caractérisé en ce qu'**un réglage accidentel de la longueur totale du stabilisateur (10) peut être bloqué par le biais d'un moyen de verrouillage (72).

14. Stabilisateur selon la revendication 13, **caractérisé en ce que** le moyen de verrouillage (72) comprend un étrier de ressort (74) qui vient en prise dans un évidement (76) prévu sur la périphérie du moyen de limitation (48).

15. Stabilisateur selon la revendication 14, **caractérisé en ce que** l'évidement (76) présente la forme d'un renfoncement en forme de fente, qui est orienté dans la direction d'un mouvement du ressort se produisant entre le premier organe stabilisateur (12) et le deuxième organe stabilisateur (14).

16. Stabilisateur selon la revendication 14 ou 15, **caractérisé en ce qu'**une pluralité d'évidements (76) est disposée de manière répartie uniformément le long de la périphérie du moyen de limitation (48).

17. Stabilisateur selon les revendications 14 à 16, **caractérisé en ce que** le clapet de blocage (34) est évidé dans la région de l'étrier de ressort (74) de telle sorte qu'une sortie par pivotement de l'étrier de ressort (74) soit possible lorsque le clapet de blocage (34) se trouve dans la position de blocage prédéfinie.
